# EUROPEAN PATENT APPLICATION

(11) **EP 2 450 220 A1**
(43) Date of publication of application: **09.05.2012**
(21) Application number: 10794432.4
(22) Date of filing: 05.07.2010
(51) Int. Cl.: B60L 11/12

(54) **ELECTRIC VEHICLE**

(30) Priority: 03.07.2009 RU 2009125452; 19.11.2009 RU 2009142694
(71) Applicant: Zakrytoe Aktzionernoye Obschestvo Nauchno-Proizvodstevvnoe Predriyatie "Inkar-M", Moskovskaya obl. 141070 (RU)
(72) Inventor: VERSHININ, Dmitriy Veniaminovich, Odeskaya Oblast 65029 (UA); DASHKO, Oleg Grigorievich, Moskovskaya Oblast 141077 (RU); SMOTROV, Evgeny Alexandrovich, Odesskaya Obl. 65009 (UA)
(74) Representative: Maiwald Patentanwalts GmbH
(86) International application number: PCT/RU2010/000372
(87) International publication number: WO 2011/002342

(57) **Abstract**

An electric vehicle is proposed which comprises a reversible power supply (or which is coupled with a reversible power supply), one or more electric motors that are connected to wheels via a mechanical transmission (or without such transmission), one or several reversible converters, which make it possible to control the speed and/or torque of the aforesaid electric motors in all four quadrants of electromechanical characteristic, a high capacity capacitor (supercapacitor) and a ballast resistor.

The vehicle is provided with a reversible dc step-up/step-down transformer, two current sensors, two voltage sensors, a vehicle speed sensor, a speed sensor for one of the electric motors and a control system, wherein one or several reversible converters are connected directly to the terminals of the reversible power supply. The supercapacitor is connected to the terminals via the reversible transformer. The ballast resistor, parallel-connected to a bypass diode, is connected in series with a discharge key to the same terminals. One sensor indicates the current value and direction of the reversible power supply, the second sensor takes measurements of coil (inductance choke) current being a component of the transformer. One voltage sensor measures the voltage at the capacitor terminals. The outputs of the aforesaid sensors, together with the output of the speed sensor, are connected to the inputs of the control system, the outputs of which are connected to the control inputs of the transformer and a discharge key. The technical result is a reduction in energy loss as a result of the increased use of recovered energy.

## Description

### Technical Field

The present invention relates to the field of electric vehicles (EVs) and can be used both on the EVs equipped with self-contained power supply and on the EVs connected to the external power supply (in trams, trolleybus, metropolitan trains).

In more detail, this invention relates to the technical decisions on recovery (storage) of electric energy in the course of the transport vehicle braking.

### Background Art

There are already known various decisions for improvement of recovered power usage effectiveness in the process of an electric vehicle braking.

For example, there is known a "Battery-fed vehicle traction motor with capacitor boost" (Patent FR 2757806 A1, B60L 11/00, dated 03.07.1998). The apparatus comprises a motor that is connected to wheels of an electric vehicle with electronic control powered from a storage battery, a capacitor bank and a logic unit. The logic unit output is connected to a relay coil the contacts of which connect the capacitor bank in series to the storage battery. Basically, the capacitor bank gets connected during the regenerative braking and in the course of the transport vehicle acceleration. If the regenerative braking does not provide for the capacitor bank full charging, a separate, battery-dependent charger is used.

Disadvantage of the prior art apparatus consists in high power-to-size ratio of the power unit due to overvoltage of the power supply when the storage battery is connected in series to the capacitor bank, and high complexity of the apparatus owing to the use of an additional battery charging unit.

Moreover, during the regenerative braking the capacitor bank charging rate being equal to the battery charging rate is determined only by the condition of said bank and battery and by the rate of braking, and it can exceed the permissible (recommended) value which may lead to decrease of the storage battery life cycle.

An "Electric drive motor for car wheels" disclosed in the USSR Author's Certificate No. 74107 is close to the technical essence of the proposed invention. The prior art apparatus comprises a power source designed for charging a battery which is connected via an isolation diode to a unit of molecular capacitors parallel-connected to the input of a controlled voltage converter. The speed of rotation is controlled by variation of the output voltage of the aforesaid converter that provides for electric power transfer to an electric drive motor with a voltage conversion step-down ratio and recovery of electric power of the electric drive motor during its braking with a voltage conversion step-up ratio. In the course of braking the transfer of energy from the battery to the electric motor gets seized, and said motor transfers to a generator mode. In this case, a braking torque, proportional to the current produced at the generator output, is applied to the wheels, and the converter operates in the mode of the generator overvoltage. In further movement the power is delivered to the converter from a capacitor bank, in such a case, this process will last until the equality of voltages occurs at the battery and capacitor bank. After that, the electric motor is powered from the battery.

Disadvantage of the prior art apparatus consists in the presence of an isolation diode between the main power source, i.e. the storage battery, and the main user, which is a converter with an electric drive motor, which causes additional losses through the diode, basically in the motor conditions, and the presence of the heat sink of the isolation diode, installed in the power circuit, worsens weight and space saving parameters of the electric vehicle. In the process of braking, as far as the power is stored in the capacitor bank, the voltage builds up at the converter terminals. This imposes additional requirements when selecting the elements of the power amplifier of the converter, namely, the power transistors, capacitors of the power filters, drivers and the like, which, as a rule, leads to over-estimation of power-to-size ratio and cost of the converter, and complicates the logic (tuning) of the converter operation, because it should operate at a supply voltage varying over a wide range.

Disadvantage of the prior art solution also consists in that the use of the energy stored in the bank of capacitors, i.e., their discharge commences at the vehicle starting, when the vehicle speed starts changing from zero (minimum value) to new (preset) value. In the process, the power consumed by the converter, and consequently, the power source current vary from zero (minimum value) to maximum value corresponding to the vehicle maximum speed. Therefore, it seems advisable to use the power stored in capacitors for acceleration to a medium and higher speed value in order to decrease the power source load and to reduce the maximum input current of the power source.

The article titled "Sealed Lead - Acid Batteries" (www.powerinfo.ru/accumulatortype.php) presents a relationship of the lead-acid battery service life and depth of discharge. As it is shown by curves, a two-fold decrease of the depth of discharge increases the number of cycles, i.e., the battery service life. Similar relationships are true for the batteries of other types.

When two independent in-wheel electric drive motors are used in an EV on one or on each axle there arises a problem of sound control over independent electric drive motors.

An "Electric Vehicle" disclosed in the RU 2048309 C1 is close to the technical essence of the present invention. The prior art apparatus comprises a hybrid power source, switchgear for selecting the direction of movement "forward-rearward", the operation modes: rear-wheel drive, front-wheel drive, four-wheel drive, and drive and brake pedals coupled with respective rheostats, as well as reversible electric drive motors of front and rear wheels.

To provide for similar speed values the electric drive motors of front, and consequently, rear wheels are pair-wise coupled in series.

The disadvantage of the prior art apparatus consists in absence of the availability of split control over spewed value and/or torque of wheels of the axle.

During the EV turning the speed of all four wheels is in the general case different, and the less is the turn radius the more is the difference of speed, Moreover, the total current of the axle electric motors causes the same wheel torque on the axle. In the mean time, generally the resistive wheel torque on the axle is different, and the required motor torque or brake torque on the axle wheels should also be different. For example, when one wheel gets in contact with slush, and the other wheel contacts asphalt, the traction coefficients become different on different wheels by n-th order, and the first wheel in the prior art solution will rotate at maximum speed, while the second wheel will stand still, in much the same way as it is in the case with a mechanical differential. Different speed of wheels in the EV turning at the same speed setting will result in different loading of motors. At the same time the selection of a speed preset value is of great importance. If the actual wheel speed is greater than the preset one the drive motor switches to a braking (generator) mode, and the wheel starts braking the EV. This may lead to a loss of the EV stability.

### Summary of the Invention

It is an object of the present invention to eliminate some of the aforesaid disadvantages of the prior art apparatuses and thus to increase the factor of utilization of energy recovered in braking, reducing the EV weight and space saving parameters and cost, increase of the service life of self-contained reversible power source, and improvement of the EV performance characteristics, such as, maneuverability, road readability, fuel economical efficiency, distance covered with one battery charge.

These objects are achieved in the proposed electric vehicle. The vehicle comprises at least one electric motor coupled with the wheels of the vehicle via a mechanical transmission (or without such transmission), and a control system comprising one or several reversible converters, which make it possible to control the speed and/or torque of the aforesaid electric motor, a high capacity capacitor and a ballast resistor with a discharge key, and it additionally comprises at least one reversible dc step-up/step-down transformer with a control system, two current sensors, two voltage sensors, a speed sensor for the electric motor, wherein one or several converters are connected surely to the power source terminals, the capacitor is connected to the power source terminals via the aforesaid reversible transformer; the first current sensor indicates the current value and direction of the reversible power supply, the second current sensor takes measurements of current of inductance choke being a component of the transformer. The first voltage sensor measures the voltage at the power source terminals, and the second voltage sensor measures the voltage at the capacitor terminals. The outputs of the aforesaid sensors are connected to the inputs of the reversible converter control system the outputs of which are connected to the control inputs of the reversible transformer and discharge key.

When a self-contained reversible power source is used it is expedient to employ as such a source a storage battery, supposedly, optionally equipped with an electrochemical generator using fuel cells.

The reversible converter can be built around four transistor switches, shunted by four bypass diodes, and inductance choke, wherein the first transistor collector is connected to the power source terminal, the first transistor emitter is coupled with the second transistor collector and the first output of the choke; the third transistor collector is connected to the capacitor terminal; the third transistor emitter is coupled with the fourth transistor collector and the choke second output; the second transistor emitter is coupled with the fourth transistor emitter, capacitor second terminal and power supply second terminal.

The reversible converter provides for the capacitor preliminary charging to the maximum voltage using the preset current and its recharging under the conditions of insufficient level of recovered power.

The control system in the proposed vehicle determines the value of static current during the vehicle starting with reference to the breakaway toque based on the information received from the speed sensor.

The control system also provides for the power source current limiting at the expense of the energy reserve in the capacitor during the vehicle acceleration, charging the capacitor at the expense of the electric motor power recovered during the vehicle braking with change of polarity of the signal of the first current sensor, and charging the capacitor by limiting the power source charging current at preset level, and connecting the ballast resistor to the power source terminals under conditions that the voltage at the power source terminals exceeds preset value, and gradual regulation of the ballast resistor current from zero to the maximum value.

At the vehicle intermediate speed values (between zero value and maximum value) the control system provides in the capacitor a voltage level that is sufficient for generating the vehicle cranking amps during acceleration from the intermediate speed value to the maximum speed value, and it supports storing in the capacitor the energy recovered during the vehicle braking from the intermediate speed value to full stop.

Additionally, during the use of two independent in-wheel electric drive motors on one or each axles in the proposed EV coupled with external power source or comprising a self-contained power source; there is available an energy recuperator formed by said reversible converter with a choke and a supercapacitor: a torque and motion speed setting control, a brake torque setting control, a motion mode select switch, two or four wheel electric drive motors coupled respectively with two or four wheels of a vehicle, tow or four reversible converters for regulating the torque of electric drive motors, and equipped with a steering angle sensor and top level control system (TLCS), wherein said setting controls and motion mode select switch along with steering angle sensor are connected to the TLCS inputs, and the TLCS outputs are connected to the control inputs of the reversible converters having a reciprocal design with discrete setting of current limiting level in the motor and brake operating conditions. Moreover, the TLCD inputs can also be used to connect the outputs of converters carrying the information about current and speed of electric drive motors. The TLCS generates settings of speed (torque) of motors with account of position of steering and accelerator and brake pedals.

To provide for required (controllable) comfort of the EV acceleration with the accelerator pedal set to the initial position the TLCS sets a zero current (torque) value and minimum speed value. With the accelerator pedal being depressed first the value of currant (torque) setting gets increased with the speed setting being constant (minimal). After the peak value of the current limiting level further depressing of the accelerator pedal increases the speed setting.

To avoid loss of grip of wheels (wheel slip) the TLCS controls the derived wheel speed during acceleration, and when preset value is exceeded it limits the current (torque) level, i.e., it provides for anti-slip (traction control) conditions.

To gain in regulation performance, to provide for required (controlled) rate of deceleration and stability in heavy braking the TLCS, under conditions of the speed setting signal fade-out and the drive transfer into braking mode with the brake pedal being pressed to the initial position, sets the value of braking current (torque) as follows: zero value (coasting mode) or certain, predetermined value (similar to motor braking in a vehicle), and with the brake pedal being depressed it increases the current (torque) setting. In this case the TLCS, based on the information about the speed of wheels, controls the rate of "downhill" braking and, if required, limits the value of braking torque, or it generates a pulsating torque component to prevent locking of wheels.

It is expedient for enhancement of steering comfort and stability to use the lateral acceleration sensors, the outputs of which are connected to the TLCS inputs, by implementing in this case a function of ensuring the roadholdin ability.

Other features and advantages of the present invention will become apparent by reference to the following description and drawings, wherein.
Fig. 1 shows of the proposed EV without the TLCS.
Fig. 2 illustrates an embodiment of an electrical schematic circuit for a reversible converter.
Fig. 3 represents a functional diagram of proposes EV.
Fig. 4 represents a relationship of the TLCS output signals for setting speed and torque and the accelerator pedal position.

### Detailed Invention

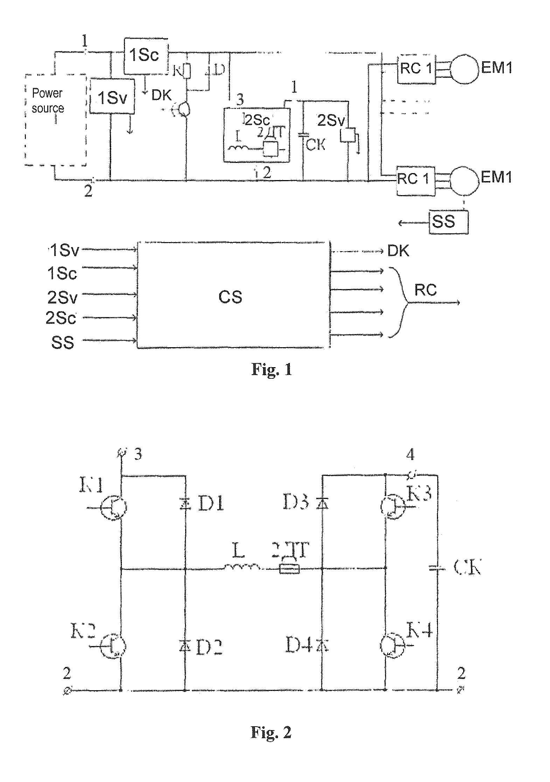

Fig. 1 shows a schematic circuit of the proposed EV comprising a self-contained (on-board) or coupled with an external reversible power source with terminals 1 and 2 at which the voltage is measured by a voltage sensor, and the current is measured by a current sensor.

Terminals 1 and 2 are used to connect in series a ballast resistor R (parallel-connected to a bypass diode (D)), a discharge key (DK) and reversible converters (RC1 to RCi) providing for regulation of aped and/or torque of electric motors (EM1 to EMi) coupled to the EV wheels via a mechanical transmission or without a transmission (motor-wheels) (not shown in the schematic).

The schematic also represents a supercapacitor (SC) which voltage is measured by sensor 2Sv. SC is connected to the output terminals of the reversible converter (RC) 4 and 2 the output terminals 3 and 2 of which are connected to terminals 1 and 2 of power source 1.

Fig. 2 illustrates an embodiment of a reversible converter (RC) built around four transistor switches S1 to S4 parallel connected to bypass diodes D1 to D4, and inductance coil L which current is measured by sensor 2Sc.

The outputs of the aforesaid sensors, including the output of the speed sensor associated with one of the electric motors, are connected to a control system (CS).

The CS outputs are connected to the control inputs of RC and DK.

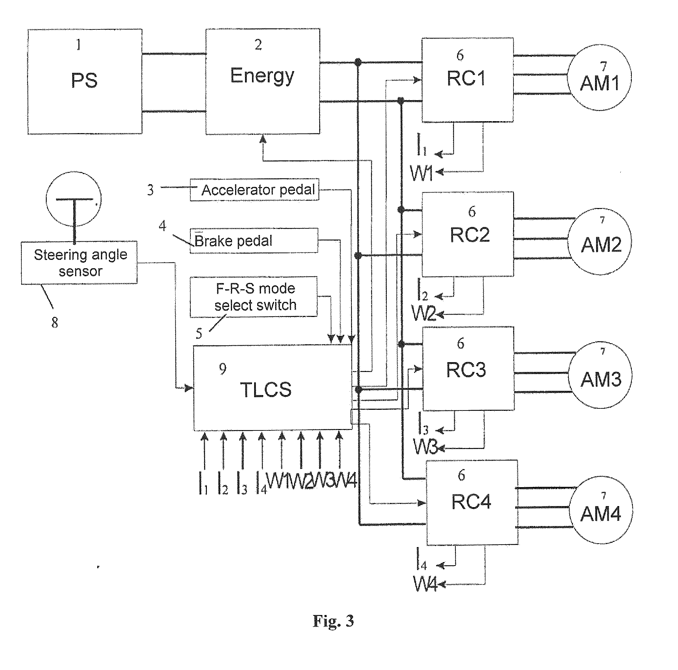

The top level control system of the EV communicating the signals of steering angle sensor, position of accelerator pedal (setting the speed and/or torque of electric motor), and brake pedal (setting the braking torque), position of hand (parking) brake, mode select switch (forward-rearward etc.) from RC1 to RCi, is shown in the diagram of Fig. 3.

The proposed apparatus operates as follows.

In response to the operator's (driver's) command on turning the ignition key the CS performs charging the SC from power source 1 by means of RC. Initially, by varying the K1 transistor relative pulse duration (connection time) from zero to one the SC charges to the voltage of source 1. Then, with the start-and-run transistor K1 the SC charges to a maximum voltage (Uscmax).

In starting the EV the control system controls the current of reversible source 1 by means current sensor 1Sc, and in the EV breakaway (which torque is identified by a signal from the speed sensor) it indicates the level of source 1 that corresponds to the EV static moment. Starting from this moment (breakaway) the CS starts discharging the SC to reversible converters (EC1 to ECi) thus maintaining the current of source 1 at fixed level. Thereby, the limitation of the source 1 cranking amps is provided.

In braking the EV and recovering power at the output of current sensor 1Sc the output signal polarity changes. When said signal exceeds preset value corresponding to the nominal (permissible) charging rate of reversible power source (SB). The CS starts charging the SC simultaneously maintaining the source 1 charging current at preset level.

The voltage value in the SC is measured by voltage sensor 2Sv. The value of SC capacitance is selected with account for absorption of the EV kinetic energy reserve, corresponding to the maximum speed and the EV maximum load, i.e. maximum value. When the voltage permissible value in the SC (Uscmax) is achieved the CS terminates the SC charging. If in this event the power recovery process did not stop (i.e. the braking process did not finish), for example, the EV lengthy hill descent, then, the voltage starts to build up at terminals 1 and 2. In response to the signal from 2Sv the CS sends control signals to the discharge key (DK). In this case, the CS performs gradual variation of the DK current via ballast resistor R which shunts the power source (terminals 1 and 2) and provides for gradual voltage limiting at terminals 1 and 2.

With insufficient voltage level at the SC terminals after the braking end the CS recharges the SC by means of RC from power source 1.

Thus, the proposed EV provides for preliminary charging and, if necessary, recharging of the SC to the required voltage level at a parking place, the SC discharging to the load during the EV acceleration. In this case, the power source current limitation at the EV static current (torque) level is provided. Owing to the reversible converter the SC (when necessary) is discharged to Uscmax which is lower than voltage of the power source 1. During movement with an intermediate speed (less than the EV maximum speed) the SC stores an energy reserve being sufficient for providing the cranking amps of the source, when necessary, acceleration to the maximum speed, and the SC maintains an option of receiving (storage) electrical energy recovered during braking at intermediate speed to stop.

A portion of recovered energy is uploaded into the reversible power source with observance of the requirements for the power source charging conditions.

The proposed apparatus provides for reduction of regulation losses due to increase of the recovered energy utilization factor, increase of lifetime of self-contained reversible power source (the cost of this source constitute significant part of the total EV cost), and it decreases the weight and space saving and cost parameters of SC due to expansion of the range of voltage variation on the SC terminals and feeding a portion of recovered energy back to the reversible power source with observance of conditions of the source charging.

The proposed apparatus can be used both in electric vehicles with a self-contained power source and in municipal electric transport (trams, trolleybus, metropolitan train) with external (coupled) power source. In the latter case the invertibility property can be embodied by installing a bank of capacitors at the EV input (terminals 1 and 2. Actuating electric motors can be of any type, DC or AC.

The converters shall provide for operation of electric drive motors in all four quadrants of electromechanical characteristic and have the invertibility property, i.e. carry the energy recovery during braking.

In the embodiment illustrated in Fig. 3, the EV comprises, or connected to the power source (PS) 1, energy recuperator (2), a motion speed (torque) setting control (accelerator pedal (3), braking torque setting control (brake pedal (4)), motion mode select switch (forward, rearward, stop (5)). The apparatus incorporates a reversible converter RC1 to RCi of motors (6) coupled with the wheels or built in the wheels (motor-wheels) MW1 to MWi (7), a steering angle sensor (8) and top level control system (TLCS) (9), wherein said setting and mode select controls along with the steering angle sensor are connected to the TLCS inputs, while the TLGS outputs are connected to the control inputs of converters RC1 to RC4.

The power source (PS) can be embodies as a storage battery (SB) and/or electrochemical generator using fuel cells. It is also possible to use the system "internal combustion engine - generator" which in combination with a SB forms so called combined power plant (CPP). The PS can be external, as in a trolleybus.

Energy recovery device, which is a pack comprising an energy storage, such as, supercapacitor, receiving the energy generated by electric motors during braking (recovery), energy storage and feed back to the power circuit during the EV acceleration and movement in response to the TLCS command, is described above.

Converters RC1 to RC4 provide for control over the speed and/or torque of drive motors DM1 to DV4 in accordance with the TLCS settings. The converters possess the invertibility property, i.e., during operation in the braking (generator) conditions they feed the energy back to the supply circuit.

Actuating motors AM1 and AM4 can be of various design, i.e. DC or AC, commutator or brushless. In particular, there can be used inverted synchronous three-phase motors with permanent=magnet excitation (which rotor is an outer rotating part, and stator is an inner motionless part), built in the wheel (motor - wheel)).

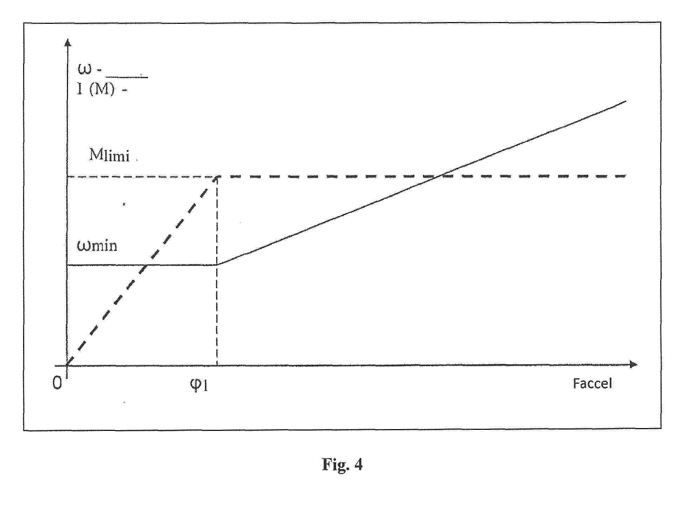

Fig. 4 represents a relationship of the TALCS output signals for setting speed 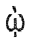 and current (torque) I (M) and the accelerator pedal position F_{gas}. With the EV at stop and the accelerator pedal in initial position the TLCS sots 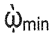 and zero level current (torque). With the accelerator pedal depressed the operator (driver) sets the torque developed by AM. As the current (set) torque reaches the value of resistance static torque the EV breaks away and accelerates with a dynamic torque defined by a difference of set and static torques, i.e. determined by the operator. As far as the EV accelerates after it reaches the current speed value of 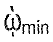 level the electric drive (ED) operates in the system maintaining preset value of speed, and the torque in the E is limited at Mₗᵢₘᵢₜ level. Thus, the EV start-up (breakaway) is provided at a rate determined by the driver.

With decrease of the preset speed value (or at full release of the accelerator pedal) the ED transfers into braking mode with minimum (or zero) braking torque (coasting). Presence or value of minimum braking torque in this mode is set in advance to the driver's convenience (custom), i.e. similar to "vehicle motor braking".

To increase the braking torque the driver depresses the brake pedal setting the required value of and providing the required rate of braking. Based on the information about the AM speed the TLCS tracks the dynamics of the braking process and, when necessary, it limits the value of braking torque thus providing for anti-blocking mode.

Similar technique is used to control the rate of acceleration. The TLCS provides for anti-slip mode thus limiting the value of motor torque.

With the lateral accelerometer being installed the TLCS is capable, if the required software is available, of providing a road-holding system as well. But in contrast to implementing said nodes of operation in the prior art transport vehicles, in the proposed EV said modes are provided only by electric technique, i.e. by limiting the value of motor and/or braking torque of wheels separately, which in the event of providing the energy recovery conditions significantly increases the efficiency of control and distance covered by the EV on one battery charge.

## Claims

1. An electric vehicle is proposed which is equipped with a self-contained reversible power supply (or which is coupled with an external reversible power supply), comprising at least one electric motor coupled to wheels via a mechanical transmission (or without such a transmission), and a control system comprising one or several reversible converters, which make controllable the speed and/or torque of the aforesaid electric motors, a high capacity capacitor and a ballast resistor with a discharge key, which is distinctive in that it includes at least one a reversible dc step-up/step-down transformer with a control system, two current sensors, two voltage sensors, an electric motor speed sensor, wherein one or several converters are connected directly to the terminals of the power source. The capacitor is connected to the terminals of the power source via the aforesaid reversible converter. The first current sensor indicates the current value and direction of the reversible power source, the second sensor takes measurements of current of an inductance choke being a component of the reversible converter. The first voltage sensor measures the voltage at the power source terminals, the second voltage sensor measures the voltage at the capacitor terminals. The outputs of these sensors are connected to the inputs of the control system of the reversible converter. The outputs of said control system are connected to the control inputs of the reversible converter and a discharge key.

2. An apparatus of claim 1, wherein the reversible power supply is a storage battery.

3. An apparatus of claim 2, wherein the reversible power supply further comprises an electrochemical generator using fuel elements.

4. An apparatus of claim 1, wherein the reversible converter is built around four transistor switches, shunted by four bypass diodes, and inductance choke, wherein the transistor collector is connected to the power supply terminal, the first transistor emitter is coupled with the second transistor collector and the first output of the choke; the third transistor collector is connected to the capacitor terminal; the third transistor emitter is coupled with the fourth transistor collector and the choke second output; the second transistor emitter is coupled with the fourth transistor emitter, capacitor second terminal and power supply second terminal.

5. An apparatus of claim 1, wherein the reversible converter provides for the capacitor preliminary charging to the maximum voltage using a preset current, and its additional charging when the regenerative power level is insufficient.

6. An apparatus of claim 5, wherein the control system determines the value of static current during the vehicle starting by a breakaway torque based on the speed sensor information, and during the vehicle acceleration it provides for the power source current limiting at the expense of the energy reserve in the capacitor.

7. An apparatus of claim 1, wherein the control system provides for the capacitor charging at the expense of the electric drive motor energy recovered in braking the transport vehicle with change of polarity of output signal of the first current sensor.

8. An apparatus of claim 2, wherein the control system provides for charging the capacitor by limiting the power source charging current at preset level.

9. An apparatus of claim 7, wherein the control system provides for connecting the ballast resistor to the power source terminals under conditions that the voltage at the power source terminals exceeds preset value, and gradual regulation of the ballast resistor current from zero to the maximum value.

10. An apparatus of claim 4, wherein at the vehicle intermediate speed values the control system provides in the capacitor a voltage level that is sufficient for generating the vehicle cranking amps during acceleration from the intermediate speed value to the maximum speed value, and it supports storing in the capacitor the energy recovered during the vehicle braking from the intermediate speed value to full stop.

11. An apparatus of claim 1, wherein the wheels of at least one axle are coupled with independent electric drive motors, and wherein each regulation of the speed and torque of said electric drive motors is performed from individual reversible converters having a reciprocal design with discrete setting of current limiting level in the motor and brake operating conditions, in this case the apparatus comprises the controls for setting the motion speed and torque, and for setting the braking torque; a motion mode select switch, a steering angle sensor, a top level control system, wherein said controls for setting the motion speed and torque and braking torque along with the steering angle sensor are connected to the top level control system, while the outputs of said system are connected to the control inputs of the aforesaid individual reversible converters.

12. An apparatus of claim 11, **characterized in that** additional inputs of the aforesaid individual reversible converters carrying the information about current and speed of electric drive motors are connected to the inputs of the top level control system.

13. An apparatus of claim 11, **characterized in that** the top level control system sets the zero level of setting the motion current and minimal level of speed setting, with the accelerator pedal being in the initial position, for providing controllable comfort of the electric vehicle acceleration.

14. An apparatus of claim 11, **characterized in that** the top level control system controls the derived speed of the wheels during acceleration, and when preset value is exceeded, it limits the level in the motor operation conditions.

15. An apparatus of claim 11, **characterized in that** it is equipped with lateral accelerometers the outputs of which are connected to the inputs of the top level control system.
